# EUROPÄISCHE PATENTSCHRIFT

(11) **EP 1 377 838 B1**
(45) Veröffentlichungstag und Bekanntmachung des Hinweises auf die Patenterteilung: **01.02.2006**
(21) Anmeldenummer: 02737780.3
(22) Anmeldetag: 05.04.2002
(51) Int. Cl.: G01P 15/08

(54) **VORRICHTUNG ZUM MESSEN VON BESCHLEUNIGUNGEN**
DEVICE FOR MEASURING ACCELERATIONS
DISPOSITIF DE MESURE D'ACCELERATIONS

(30) Priorität: 10.04.2001 DE 10118954
(43) Veröffentlichungstag der Anmeldung: 07.01.2004
(73) Patentinhaber: Hübner Elektromaschinen GmbH, 10967 Berlin (DE)
(72) Erfinder: WILHELMY, Lothar, 14195 Berlin (DE); HILLER, Bernhard, 10115 Berlin (DE)
(74) Vertreter: Böning, Manfred
(86) Internationale Anmeldenummer: PCT/DE2002/001348
(87) Internationale Veröffentlichungsnummer: WO 2002/084304

(56) Entgegenhaltungen:
- DE-A- 3 730 841
- DE-A- 19 828 372
- US-A- 2 460 115
- US-A- 3 932 813
- US-A- 4 507 607

## Beschreibung

Die Erfindung betrifft eine Vorrichtung zum Messen von Beschleunigungen, insbesondere Linearbeschleunigungen, bei der ein aus nicht-magnetischem, elektrisch leitendem Material bestehendes, in einem Luftspalt bewegbares Messmittel senkrecht vom Feld eines durch zwei auf sich gegenüberliegenden Seiten des Messmittels angeordnete Permanentmagnete erzeugten und durch einen Bügel mit zwei Schenkeln verlaufenden Hauptmagnetkreises durchsetzt wird und bei der die infolge einer Bewegungsänderung des Messmittels in diesem erzeugten Wirbelströme einen durch zwei magnetische leitfähige Tragkörper umschließende Sensorwicklungen erfassbaren weiteren Magnetkreis erzeugen.

Aus der DE 37 30 841 A1 ist eine Vorrichtung der vorstehenden Art bekannt, bei der abgewinkelte Enden zweier mittels jeweils eines Halleffektsensors zu einem Ring geschlossener C-förmiger Tragkörper den Luftspalt für das Messmittel begrenzen und bei der jeweils eine Sensorwicklung im Bereich des Joches der C-förmigen Tragkörper angeordnet ist. Die Enden der Tragkörper sind an den einander zugewandten Flächen zweier Permanentmagnete befestigt, die ihrerseits von den Enden eines ebenfalls C-förmigen, aus magnetisch leitfähigem Material bestehenden Bügels gehalten werden, der die Tragkörper mit den Sensorwicklungen umschließt. Die bekannte Konstruktion, bei der das Hauptmagnetfeld des Permanentmagnetkreises - anders als beispielsweise aus der DE 33 14 567 C1 und der DE 198 28 372 A1 bekannt von den die Sensorwicklungen tragenden Messkreisen getrennt ist, vermag insofern nicht voll zu befriedigen, als sie einerseits vergleichsweise viel Raum beansprucht und andererseits die Anbringung der Sensorwicklungen auf den Jochen der C-förmigen Tragkörper nur mit einem unerwünscht hohen Aufwand möglich ist.

Der Erfindung liegt die Aufgabe zugrunde, eine Vorrichtung der eingangs genannten Art zu schaffen, die sich durch eine kompakte Bauweise auszeichnet und wirtschaftlich herstellbar ist. Diese Aufgabe wird erfindungsgemäß dadurch gelöst, dass die Tragkörper U-förmig ausgebildet sind, dass jeder ihrer über jeweils ein Joch miteinander verbundenen Schenkel jeweils eine Sensorwicklung trägt, dass jeweils ein Permanentmagnet derart zwischen zwei Sensorwicklungen angeordnet ist, dass der von dem Permanentmagneten erzeugte und durch eine die Schenkel des Bügels enthaltende Ebene verlaufende Hauptmagnetkreis um 90° gegenüber dem die Sensorwicklungen passierenden und durch eine die Schenkel der Tragkörper enthaltende Ebene verlaufenden weiteren Magnetkreis gedreht ist, und dass die einander zugewandten stimseitigen Enden der Schenkel der Tragkörper zusammen mit den Permanentmagneten einen Luftspalt für das Messmittel begrenzen.

Bei der erfindungsgemäßen Vorrichtung können vorgefertigte Sensorwicklungen problemlos auf die Schenkel der Tragkörper geschoben werden und der Platz zwischen den Sensorwicklungen lässt sich im Zuge der Realisierung einer kompakten Bauweise für die Unterbringung der Permanentmagnete nutzen.

Als besonders vorteilhaft erweist es sich, wenn die die Sensorwicklungen tragenden Tragkörper und die Permanentmagnete in einem eine Abschirmung bildenden, im Bereich des Luftspaltes mit einem Schlitz versehenen Gehäuse angeordnet sind.

Weitere Merkmale und Einzelheiten der Erfindung ergeben sich aus den Unteransprüchen und der nachstehenden Beschreibung zweier in der beigefügten Zeichnung dargestellter Ausführungsformen der Erfindung. Es zeigen:
- Fig. 1: die perspektivische Darstellung der wesentlichen Teile einer Beschleunigungsmessvorrichtung und eines Abschnitts des ihr zugeordneten Messmittels;
- Fig. 2: eine perspektivische Ansicht des linken Teiles der Messvorrichtung, gemäß Fig. 1 und
- Fig. 3: die perspektivische Ansicht der zur Abschirmung gegen Störfelder in einem teilweise aufgeschnittenen Gehäuse untergebrachten Messvorrichtung gemäß Fig. 1;

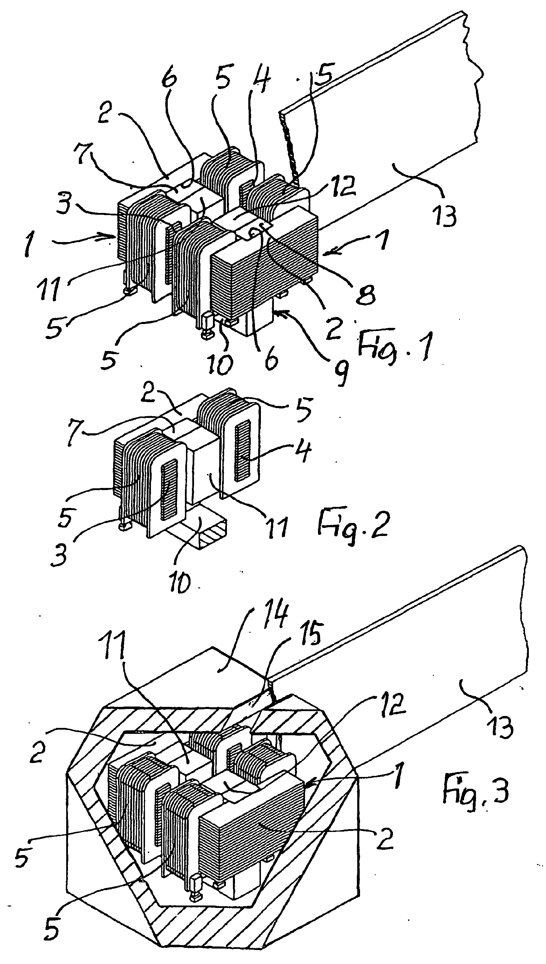

In den Figuren 1 bis 3 sind mit 1 zwei in bekannter Weise als Blechpakete ausgebildete U-förmige Tragkörper bezeichnet, deren über ein Joch 2 miteinander verbundene Schenkel 3 und 4 jeweils eine als vorgefertigte Einheit ausgebildete Sensorwicklung 5 tragen. Die Joche 2 weisen vertikale Nuten 6 auf, in denen die Schenkel 7 und 8 eines ebenfalls U-förmigen Bügels 9 eingepasst sind, dessen Joch 10 in Fig. 2 erkennbar ist. An den Schenkeln 7, 8 des Bügels sind zwei Permanentmagnete 11 und 12 befestigt. Der Abstand zwischen den Magneten 11 und 12 und den sich gegenüberliegenden Stimflächen der Enden der Schenkel 3 und 4 der Tragkörper 1 ist klein, so dass die von den Wirbelströmen in einem den von den vorgenannten Teilen begrenzten Luftspalt passierenden streifenförmigen Messmittel 13 erzeugten Wirbelstromfelder gut von den Sensorwicklungen 5 erfasst werden. Aufgrund der um 90° gedrehten Anordnung der durch die Schenkel 3, 4 der Tragkörper 1 verlaufenden Ebene zur durch die Schenkel 7, 8 des Bügels 9 und durch die Magnete 11, 12 verlaufenden Ebene, erreicht man eine Entkopplung des die Sensorwicklungen passierenden Magnetkreises und des Hauptmagnetkreises. Diese Entkopplung ermöglicht es, die magnetischen Querschnitte der Magnet- und Wirbelstromfelder zu optimieren.

Um die Gefahr magnetischer Einstreuungen beim Einsatz der Vorrichtung gemäß Fig. 1 in der Nähe von Linearmotoren mit sehr starken, durch das Primär- und/oder Sekundärteil hervorgerufenen Magnetfeldem zu eliminieren oder zumindest zu reduzieren, empfiehlt es sich, die Vorrichtung wie in Fig. 3 gezeigt mit einem Gehäuse 14 zu umgeben, das im Bereich des Luftspaltes zwischen den Magneten 11 und 12 einen Schlitz 15 aufweist.

## Patentansprüche

1. Vorrichtung zum Messen von Beschleunigungen, insbesondere Linearbeschleunigungeh, bei der ein aus nicht-magnetischem, leitendem Material bestehendes, in einem Luftspalt bewegbares Messmittel (13) senkrecht vom Feld eines durch zwei auf sich gegenüberliegenden Seiten des Messmittels (13) angeordnete Permanentmagnete (11, 12) erzeugten und durch einen Bügel (9) mit zwei Schenkeln (7, 8) verlaufenden Hauptmagnetkreises durchsetzt wird und bei der die infolge einer Bewegungsänderung des Messmittels (13) in diesem erzeugten Wirbelströme einen durch zwei magnetisch leitfähige Tragkörper (1) umschließende Sensorwicklungen (5) erfassbaren weiteren Magnetkreis erzeugen, **dadurch gekennzeichnet, dass** die Tragkörper (1) U-förmig ausgebildet sind, dass jeder ihrer über jeweils ein Joch (2) miteinander verbundenen Schenkel (3, 4) jeweils eine Sensorwicklung (5) trägt, dass jeweils ein Permanentmagnet (11 bzw. 12) derart zwischen zwei Sensorwicklungen (5) angeordnet ist, dass der von dem Permanentmagneten erzeugte und durch eine die Schenkel (7, 8) des Bügels (9) enthaltende Ebene verlaufende Hauptmagnetkreis um 90° gegenüber dem die Sensorwicklungen passierenden und durch eine die Schenkel (3, 4) der Tragkörper (1) enthaltende Ebene verlaufenden weiteren Magnetkreis gedreht ist, und dass die einander zugewandten stirnseitigen Enden der Schenkel (3, 4) der Tragkörper (1) zusammen mit den Permanentmagneten (11, 12) einen Luftspalt für das Messmittel (13) begrenzen.

2. Vorrichtung nach Anspruch 1, **dadurch gekennzeichnet, dass** die die Sensorwicklungen (5) tragenden Tragkörper (1) und die Permanentmagnete (11, 12) in einem eine Abschirmung bildenden, im Bereich des Luftspaltes mit einem Schlitz (15) versehenen Gehäuse (14) angeordnet sind.

3. Vorrichtung nach Anspruch 1 oder 2, **dadurch gekennzeichnet, dass** die Permanentmagnete (11, 12) an den Innenflanken der Schenkel (7, 8) eines U-förmigen Bügels (9) aus magnetisch leitfähigem Material angeordnet sind.

4. Vorrichtung nach Anspruch 3, **dadurch gekennzeichnet, dass** die Schenkel (7, 8) des U-förmigen Bügels (9) in Nuten (6) der Joche (2) der U-förmigen Tragkörper (1) geführt sind.

5. Vorrichtung nach einem der Ansprüche 1 bis 4, **dadurch gekennzeichnet, dass** die Tragkörper (1) aus Blechpaketen bestehen.

6. Vorrichtung nach einem der Ansprüche 1 bis 5, **dadurch gekennzeichnet, dass** die Sensorwicklungen (5) als vorgefertigte, auf die Schenkel (3, 4) der Tragkörper (1) schiebbare Einheiten ausgebildet sind.

## Claims

1. Apparatus for measurement of accelerations, in particular linear accelerations, in which the field of a main magnetic circuit (which is produced by two permanent magnets (11, 12) arranged on opposite sides of a measurement means (13) and passes through a bracket (9) having two limbs (7, 8)) passes at right angles through the measurement means (13), which is composed of nonmagnetic, conductive material and can move in an air gap, and in which the Eddy currents which are produced in the measurement means (13) as a consequence of a change in its movement produce a further magnetic circuit which can be detected by sensor windings (5) which surround two magnetically permeable supporting bodies (1), **characterized in that** the supporting bodies (1) are U-shaped, **in that** each of their limbs (3, 4), which are each connected to one another via a yoke (2) is in each case fitted with a sensor winding (5), **in that** one permanent magnet (11 or 12 respectively) is in each case arranged between two sensor windings (5) in such a way that the main magnetic circuit (which is produced by the permanent magnet and passes through a plane which includes the limbs (7, 8) of the bracket (9)) is rotated through 90° with respect to the further magnetic circuit, which passes the sensor windings and runs through a plane which includes the limbs (3, 4) of the supporting bodies (1), and **in that** the mutually facing ends of the limbs (3, 4) of the supporting bodies (1) together, with the permanent magnets (11, 12) bound an air gap for the measurement means (13).

2. Apparatus according to Claim 1, **characterized in that** the permanent magnets (11, 12) and the supporting bodies (1) which support the sensor windings (5) are arranged in a housing (14), which forms a screen and is provided with a slot (15) in the area of the air gap.

3. Apparatus according to Claim 1 or 2, **characterized in that** the permanent magnets (11, 12) are arranged on the inner flanks of the limbs (7, 8) of a U-shaped bracket (9) composed of magnetically permeable material.

4. Apparatus according to Claim 3, **characterized in that** the limbs (7, 8) of the U-shaped bracket (9) are guided in grooves (6) in the yokes (2) of the U-shaped supporting bodies (1).

5. Apparatus according to one of Claims 1 to 4, **characterized in that** the supporting bodies (1) are composed of laminated cores.

6. Apparatus according to one of Claims 1 to 5, **characterized in that** the sensor windings (5) are in the form of prefabricated units which can be pushed onto the limbs (3, 4) of the supporting bodies (1).

## Revendications

1. Dispositif pour mesurer des accélérations, notamment des accélérations linéaires, dans lequel un moyen de mesure (13) qui est réalisé en un matériau conducteur amagnétique et est déplaçable dans un entrefer, est traversé verticalement par le champ d'un circuit magnétique principal qui est produit par deux aimants permanents (11, 12) disposés sur des côtés opposés du moyen de mesure (13) et qui traverse un étrier (9) comportant deux branches (7, 8), et dans lequel les courants de Foucault, qui en raison d'une variation de déplacement du moyen de mesure (13) sont produits dans ce dernier, produisent un autre circuit magnétique pouvant être détecté par des enroulements de détection (5) entourant deux corps de support magnétiquement conducteur (1), **caractérisé en ce que** les corps de support (1) sont agencés en forme de U, que chacune de ses branches (3, 4) reliées entre elles respectivement par l'intermédiaire d'une culasse respective (2) porte respectivement un enroulement de détection (5), que respectivement un aimant permanent (11 ou 12) est disposé entre deux enroulements de détection (5) de telle sorte que le circuit magnétique principal, qui est produit par l'aimant permanent et s'étend dans un plan contenant les branches (7, 8) de l'étrier (9), est décalé de 90° par rapport à l'autre circuit magnétique qui passe par les enroulements de détection et s'étend dans un plan contenant les branches (3, 4) des corps de support (1), et que les extrémités frontales, qui se font face, des branches (3, 4) des corps de support (1) limitent, conjointement avec les aimants permanents (11, 12), un entrefer pour le moyen de mesure (13).

2. Dispositif selon la revendication 1, **caractérisé en ce que** les corps de support (1), qui portent les enroulements de détection (5), et les aimants permanents (11, 12) sont disposés dans un boîtier (14) qui forme un blindage et qui comporte, dans la zone de l'entrefer, une fente (15).

3. Dispositif selon la revendication 1 ou 2, **caractérisé en ce que** les aimants permanents (11, 12) sont disposés sur les flancs intérieurs des branches (7, 8) d'un étrier en forme de U (9) réalisé en un matériau magnétiquement conducteur.

4. Dispositif selon la revendication 3, **caractérisé en ce que** les branches (7, 8) de l'étrier en forme de U (9) sont guidés dans des rainures (6) des culasses (2) des corps de support en forme de U (1).

5. Dispositif selon l'une des revendications 1 à 4, **caractérisé en ce que** les corps de support (1) sont formés par des paquets de tôles.

6. Dispositif selon l'une des revendications 1 à 5, **caractérisé en ce que** les enroulements de détection (5) sont agencés sous la forme d'unités préfabriquées, qui peuvent être emmanchées sur les branches (3, 4) des corps de support (1).
